# EUROPÄISCHE PATENTANMELDUNG

(11) **EP 0 631 139 A1**
(43) Veröffentlichungstag der Anmeldung: **28.12.1994**
(21) Anmeldenummer: 94103773.1
(22) Anmeldetag: 11.03.1994
(51) Int. Cl.: G01P 3/44

(54) **Dichtungsvorrichtung mit Messwertaufnehmer**

(30) Priorität: 24.06.1993 DE 4320940
(71) Anmelder: Firma Carl Freudenberg, D-69469 Weinheim (DE)
(72) Erfinder: Kilthau, Gerhard, Dr., D-68259 Mannheim (DE); Eckel, Hans-Gerd, Dr., D-69514 Laudenbach (DE); Guthardt, Fernando, 69518 Absteinach (DE); Metzner, Hermann, D-69509 Mörlenbach (DE); Dahlhaus, Ulrich, D-68535 Edingen (DE); Wentzler, Hanno, D-69469 Weinheim (DE); Rapp, Hermann, Dr., D-69509 Mörlenbach (DE); Vogt, Rolf, D-68723 Oftersheim (DE)

(57) **Zusammenfassung**

Kassettendichtung, umfassend zwei Ringe (1) und (4), von im wesentlichen winkelförmig begrenztem Profil, die entgegengesetzt ineinanderliegend angeordnet sind und gemeinsam einen Hohlraum (10) umschließen, wobei der eine Ring (1) zumindest eine Dichtlippe (3) aufweist, die den anderen Ring (4) relativ verdrehbar berührt und wobei zumindest der eine Ring (4) zur Erfassung von Relativverdrehungen mit einem Sensor (6) und der andere Ring (1) mit einem Impulsgeber (7) versehen ist, wobei der Sensor (6) und der Impulsgeber (7) zumindest teilweise in dem von den Ringen (1) und (4) und der Dichtlippe (3) umschlossenen Hohlraum (10) angeordnet sind.

## Beschreibung

Die Erfindung betrifft eine Kassettendichtung, nach dem Oberbegriff von Anspruch 1.

Eine solche Kassenttendichtung ist aus der EP-PS 438 624 bekannt. Sie wird zur Messung der Rotationsgeschwindigkeit zwischen zwei relativ zueinander rotierenden Teilen, die als Lagerung und Stütze eines Kraftfahrzeugrades dienen, verwendet. Es wird speziell die Relativverdrehung zwischen zwei Ringen erfaßt. Hierzu sind ein lmpulsgeber und ein Sensor vorgesehen. Diese sind auf der Außenseite der Kassettendichtung angebracht. Dadurch wird zusätzlicher Raum für den Einbau benötigt, was wenig befriedigend ist. Außerdem ist es schwierig, die richtige gegenseitige Zuordnung herzustellen und langfristig zu gewährleisten. Sowohl der Sensor als auch der lmpulsgeber sind außerdem der Einwirkung von Staub und Schmutz aus der Umgebung ausgesetzt, was zu fehlerhaften Meßwerterfassungen führen kann.

Aufgabe der Erfindung ist es, eine Kassettendichtung der eingangs genannten Art derart weiterzuentwickeln, daß die Nachteile der Ausführung nach dem Stand der Technik vermieden sind.

Diese Aufgabe wird erfindungsgemäß bei einer Kassettendichtung nach dem Oberbegriff durch die kennzeichnenden Merkmale des Hauptanspruchs gelöst. Auf vorteilhafte Ausgestaltungen nehmen die Unteransprüche bezug.

Bei der erfindungsgemäßen Kassettendichtung ist es vorgesehen, daß der Sensor und der lmpulsgeber zumindest teilweise in dem von den Ringen und der Dichtlippe umschlossenen Hohlraum angeordnet sind. Hierdurch ergibt sich der Vorteil, daß auf zusätzlichen Platz verzichtet werden kann und daß die funktionsentscheidenden Bestandteile in guter Weise vor Umwelteinflüssen geschützt sind. Dabei ist es auch möglich, daß der lmpulsgeber und der Sensor ganz in dem von den Ringen und der Dichtlippe umschlossenen Hohlraum angeordnet sind. Besonders vorteilhaft ist hierbei die optimale Abschirmung von sekundären Einflüssen aus der Umgebung.

Der eine Ring kann in Umfangsrichtung verteilte Aussparungen aufweisen, die durch Stege getrennt sind und mit diesen zusammen den Impulsgeber bilden. Die Stege erzeugen bei ihrer Vorbeiführung an dem Sensor während der Relativverdrehung des Ringes jeweils ein Signal, daß in dem Sensor als Impuls erfaßt und an eine Auswertungseinrichtung übermittelt wird. Dabei ist es auch möglich, daß die Stege magnetisiert sind.

Durch die Integration des Impulsgebers und des Sensors in das Innere der Kassettendichtung ist eine nachträgliche Montage entbehrlich. Zusätzlich wird eine präzise auf einen bestimmten Sollwert festgelegte gegeseitge Zuordnung gewährleistet und sekundäre Randbedingungen haben hierauf keinen Einfluß mehr, beispielsweise die Präzision der Radlagerung eines Kraftfahrzeuges.

Der Impulsgeber und der Sensor sind bei der erfindungsgemäßen Kassettendichtung vor Umwelteinflüssen wie Staub, Schlamm, Wasser und vor Korrosion geschützt. Damit kann die Fehlerrate bei Erfassung der Impulse stark eingegrenzt werden und damit einer Verfälschung von Meßergebnissen entgegengewirkt werden.

Der Sensor und der Impulsgeber sind durch einen Zwischenraum getrennt. Dieser kann durch einen Ringspalt von der Außenluft getrennt sein. Der Ringspalt kann unterschiedlich ausgeführt sein. Eine mögliche Ausführungsform kann sein, daß der Ringspalt zwischen dem Zwischenraum und der Außenluft zumindest an einer Stelle abgewinkelt ist. Das Eindringen von Feuchtigkeit und Schmutz aus der Umgebung in den Bereich des Zwischenraums wird hierdurch weiter erschwert. Die Möglichkeit, Signale in optimaler Weise zu erfassen, wird hierdurch weiter verbessert. Der Ringspalt kann auch labyrinthartig ausgebildet sein. Damit kann ein gutes Dichtungsverhalten erzielt werden.

Eine weitere Ausführung der Kassettendichtung kann darin bestehen, daß die Stelle, an der der Ringspalt abgewinkelt ist, zumindest fünfmal soweit von der Außenluft entfernt ist, wie der Sensor vom lmpulsgeber. Dadurch wird das Eindringen von Schmutz in den Zwischenraum zeitlich verzögert und reduziert. Um die Sicherung vor Umwelteinflüssen zu verbessern, kann eine mögliche Ausführungsform darin bestehen, daß der Zwischenraum zumindest auf einer Seite von einem strömungsfreien Pufferraum begrenzt ist. Es können hierdurch langfristig verbesserte Gegebenheiten bei der lmpulserfassungs erhalten werden, weil in den Bereich des Zwischenraumes gelangender Schmutz sich nicht mehrdirekt in diesem selbst sondern in den strömungsberuhigten Nachbarbereichen niederschlägt. Dazu ist kein zusätzlicher Montageaufwand erforderlich. Die Variierung dieser und der nachfolgend geschilderten Ausführungsform ist sehr leicht mögich.

So kann beispielsweise die Anordnung beider Erfassungselemente, wie lmpulsgeber und Sensor so erfolgen, daß der Zwischenraum auf beiden Seiten von einem strömungsfreien Pufferraum begrenzt ist. Das Verhältnis aus dem Gesamtvolumen des Pufferraums und dem Zwischenraum zwischen Sensor und lmpulsgeber soll zumindest 1:50 betragen.

Mit der erfindungsgemäßen Kassettendichtung wird eine Vorrichtung angegeben, die neben der Dichtung einen lmpulsgeber und einen Sensor als eine sich geschlossene und robuste Baueinheit umfaßt. Durch die Verwendung des lmpulsgebers und Sensors innerhalb der Kassettendichtung, wird eine einfache Bauweise ermöglicht und eine genaue Erfassung der Signale erreicht. Die Herstellung des oben genannten Kassettensystems bedarf keiner aufwendigen konstruktiven Montageschritte und wirkt sich kostengünstig auf die Erfassung und Verarbeitung der Signale aus.

Unter Zuhilfenahme der Zeichnungen werden im folgenden einige Ausführungsformen der erfindungsgemäßen Kassettendichtung näher erläutert. Es zeigen:
Fig. 1 die Integration des Impulsgebers und Sensors in eine Kassettendichtung mit Ausführung des lmpulsgebers.
Fig. 2 und 3 sind Ausführungsformen der Anordnung von lmpulsgeber und Sensor mit Ausführung des lmpulsgebers.
Fig. 4 und 5 sind Impulsgeber als Ringelemente dargestellt.
Fig. 6 und 7 eine Dichtlippe mit einem daran befestigten lmpulsgeber.
Fig. 8 bis 10 Kassettendichtung für rotierende Wellen.

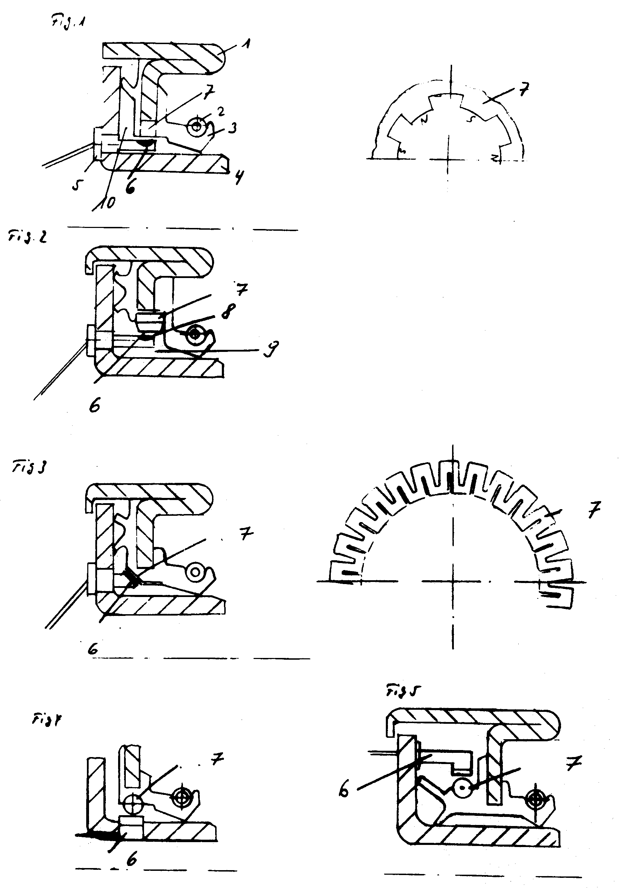

Die Fig. 1 bis 7 beziehen sich auf Ausführungsformen, bei denen sich der Ring 1 dreht und der Ring 4 feststeht. Die Fig. 8 bis 10 beschreiben Kassettendichtungsausführungen für rotierende Wellen.

In der Fig. 1 ist eine Kassettendichtung gezeigt, die zwei Ringe 1 und 4 umfaßt. Diese sind im wesentlichen durch ein winkelförmiges Profil begrenzt. Die beiden Ringe 1 und 4 liegen entgegengesetzt ineinander und umschließen gemeinsan einen Hohlraum 10. Der Ring 1 weist eine Dichtlippe 3 auf. Die Dichtlippe 3 berührt den Ring 4 relativ verdrehbar. Am Ring 4 ist zur Erfassung der Relativverdrehung ein Sensor 6 angeordnet, wobei der Sensor 6 über eine Sensorbefestigung 5 festgelegt ist, über die der Sensor 6 elektrisch leitend mit einem Steuerelement verbunden werden kann. Am Ring 1 ist ein lmpulsgeber 7 angeordnet. Die Anordnung beider Elemente 6 und 7 erfolgt erfindungsgemäß so, daß diese zumindest teilweise in dem von den Ringen 1 und 4 und der Dichtlippe 3 umschlossenen Hohlraum 10 angeordnet sind. Dadurch wird der Sensor 6 und der lmpulsgeber 7 in die Kassettendichtung integriert, ohne zusätzlichen Platz bereitstellen zu müssen. Außerdem können mögliche Verfälschungen der Meßergebnisse durch Umwelteinflüsse besser vermieden werden. Dabei können lmpulsgeber 7 und Sensor 6 auch ganz in den Hohlraum 10, der die Ringe 1 und 4 sowie die Dichtlippe 3 umschließt, eingefügt sein. In Fig. 1 ist der Ring 1 mit in Umfangsrichtung gleichmäßig beabstandeteten Aussparungen versehen, die durch Stege voneinander getrennt sind. Die Stege fungieren als lmpulsgeber 7. Sie können auch magnetisiert werden. Der Sensor 6 kann beispielsweise als Hallsensor ausgebildet sein. Dieser erfaßt die Impulse und gibt sie an ein zentrales Steuerelement weiter. Aufgrund dieser Ausführungsform können axial auftretende Toleranzen und Bewegungen, wie beispielsweise durch Wärmeausdehnungen, Montage und/oder bestimmungsgemäße Verwendung verursacht, kompensiert werden.

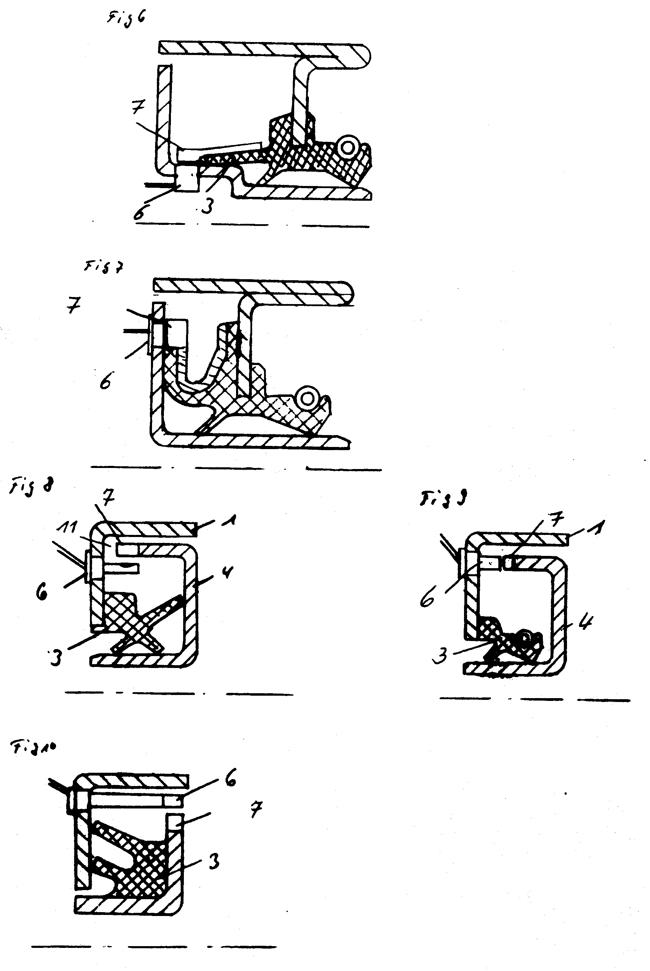

In Fig. 2 ist der lmpulsgeber 7 als Metallring ausgebildet. Er kann aber auch aus einem magnetisierbaren Kunststoffring bestehen. Eine weitere Möglichkeit besteht darin, den lmpulsgebers 7 als Federelement auszubilden. Der lmpulsgeber kann während der Anvulkanisation des Lippendichtringes durch Verklebung mit dem Ring verbunden sein. Der Sensor 6 und die lmpulsgeber 7 sind in allen Ausführungen vor Umwelteinflüssen wie Staub, Schlamm, Wasser und dadurch durch vor Korrosion geschützt. Der lmpulsgeber 7 und der Sensor 6 sind durch einen Zwischenraum 8 getrennt. Dieser Zwischenraum 8 ermöglicht eine optimale Erfassung der Impulse und ist durch einen Ringspalt 11 von der Außenluft getrennt. Dabei ist die Größe des Zwischenraumes 8 variierbar.

In Fig. 3 ist die Kassettendichtung ähnlich der in der Fig. 2 dargestellten aufgebaut. Der lmpulsgeber 7 ist als Metallring ausgebildet. Aus der Darstellung des Metallringes ist ersichtlich, daß dieser umfangsbezogene Teilungen aufweist. Die Teilungen sind genau und einfach durch ein Stanzwerkzeug herstellbar. Die Zuordnung des Sensors 6 zum lmpulsgeber 7 erfolgt unter einem speziellen Winkel, der vorzugsweise 45° beträgt. Dies hat den entscheidenden Vorteil, daß sich bei einer axialen Verschiebung der beiden Elemente 7 und 6 der Zwischenraum 8 entsprechend weniger verändert. Die lmpulserfassung kann trotzdem optimal erfolgen.

Eine weitere Ausführungsform stellt die dargestellte Kassettendichtung in den Fig. 4 und 5 dar. Der Sensor 6 ist im Ring 4 integriert und erfaßt das Signal radial. Der lmpulsgeber 7 ist in diesem Ausführungsbeispiel als geschlossenes Ringelement dargestellt, welches magnetisierbar ist und mit dem Ring 1 in Verbindung steht.

Aus den Fig. 6 und 7 ist ersichtlich, daß der Sensor 6 in den Ring 4 integriert ist. Der lmpulsgeber 7 ist mit der Dichtlippe 3 verbunden. Die Verbindung erfolgt durch Vulkanisation des lmpulsgebers 7 an die elastomere Dichtlippe 3. Dies wirkt sich in der Hinsicht vorteilhaft aus, als daß der Zwischenraum 8 zwischen dem Sensor 6 und dem lmpulsgeber 7 genau definierbar ist. Dabei kann der Impulsgeber 7 wie in der Ausführungsform der Fig. 2 dargestellt, als Federelement ausgebildet sein. Es kann eine Anpassung an die Form der Dichtlippe 3 erfolgen.

In den Fig. 8 bis 10 sind mögliche Ausführungsformen einer Kassettendichtung dargestellt, wie sie bei rotierenden Wellen zur Anwendung kommen. Der Ring 1 ist feststehend, während der Ring 4 rotiert. Der Sensor 6 ist den Ring 4 integriert, während der lmpulsgeber 7 am Ring 1 angeordnet ist. Dabei kann der lmpulsgeber 7 durch Aussparungen am Ring 1 oder durch einen Metallring wie in den Fig. 1 bis 7 realisiert werden. Der in Fig. 8 und 9 dargestellte Ringspalt 11, der zwischen dem Zwischenraum 8 und der Außenluft gebildet ist, ist zumindest an einer Stelle abgewinkelt. Das hat den Vorteil, daß Außenluft nicht ungehindert in den Hohlraum 10 eindringen kann und somit die Erfassung der Impulse fehlerhaft beeinflußt. Die Stelle der Abwinkelung des Ringspaltes 11 ist zumindest fünfmal soweit entfernt von der Außenluft, wie die Entfernung zwischen dem Sensor 6 und dem lmpulsgeber 7 beträgt. Der Ringspalt 11 kann auch durch andere Formen ausgebildet sein. Eine Möglichkeit stellt den labyrinthförmigen Ringspalt dar. Der Zwischenraum 8 kann zumindest auf einer Seite 8 aber auch bei beiden Seiten von einem strömungsfreien Pufferraum 9 (Fig. 2) begrenzt sein. Dadurch wird eine optimale von Umwelteinflüssen ausgeschaltete lmpulserfassung möglich, was einer Reduzierung von Meßfehlern entspricht. Das der Größe des verfügbaren Pufferraumes 9 und der Größe des Zwischenraumes 8 charakterisierende Volumenverhältnis kann mit etwa 1:50 definiert werden. Daraus ist erkennbar, daß die sich in der Kassettendichtung integrierbaren lmpulserfassungselemente 6 und 7 variierbar angeordnet werden können und gleichzeitig verschiedene Ausführungsformen aufweisen können, ohne daß die Funktion der Erfassung von Impulsen zur gezielten Auswertung und Weiterverarbeitung eingeschränkt wird. Zusätzlich kann die Erfassung auf diese Art fehlerreduziert erfolgen.

Die aus einer Dichtung, einem Sensor und einem lmpulsgeber bestehende Kassettendichtung kann je nach der dargestellten Ausführungsform auch von der Drehzahl abweichende Signale, erfassen wie die Temperatur, Feuchtigkeit, oder den Druck eines abzudichtenden Raumes und weiterleiten. Eine einfache lmpulserzeugung sowie durch die Unterbringung der Elemente 6 und 7 im Inneren reduzierte Baugröße erweisen sich als kostengünstige, robuste und einfach herstellbare Vorrichtung.

## Patentansprüche

1. Kassettendichtung, umfassend zwei Ringe (1) und (4), von im wesentlichen winkelförmig begrenztem Profil, die entgegengesetzt ineinanderliegend angeordnet sind und gemeinsam einen Hohlraum (10) umschließen, wobei der eine Ring (1) zumindest eine Dichtlippe (3) aufweist, die den anderen Ring (4) relativ verdrehbar berührt und wobei zumindest der eine Ring (4) zur Erfassung von Relativverdrehungen mit einem Sensor (6) und der andere Ring (1) mit einem Impulsgeber (7) versehen ist, gekennzeichnet dadurch, daß der Sensor (6) und der lmpulsgeber (7) zumindest teilweise in dem von den Ringen (1) und (4) und der Dichtlippe (3) umschlossenen Hohlraum (10) angeordnet sind.

2. Kassettendichtung nach Anspruch 1, gekennzeichnet dadurch, daß der Sensor (6) und der lmpulsgeber (7) ganz in dem von den Ringen (1) und (4) und der Dichtlippe (3) umschlossenen Hohlraum (10) angeordnet sind.

3. Kassettendichtung nach Anspruch 1 bis 2, gekennzeichnet dadurch, daß der Sensor (6) von dem lmpulsgeber (7) durch einen Zwischenraum (8) getrennt ist, der durch einen Ringspalt (11) von der Außenluft getrennt ist.

4. Kassettendichtung nach Anspruch 1, gekennzeichnet dadurch, daß der Ringspalt (11) zwischen dem Zwischenraum (8) und der Außenluft an zumindest einer Stelle abgewinkelt ist.

5. Kassettendichtung nach Anspruch 4, gekennzeichnet dadurch, daß die Stelle von der Außenluft zumindest fünfmal so weit entfernt ist wie der Sensor (6) von dem lmpulsgeber (7).

6. Kassettendichtung nach Anspruch 3 bis 5, gekennzeichnet dadurch, daß der Zwischenraum (8) zumindest auf einer Seite von einem strömungsfreien Pufferraum (9) begrenzt ist.

7. Kassettendichtung nach Anspruch 3 bis 5, gekennzeichnet dadurch, daß der Zwischenraum (8) auf beiden Seiten von einem strömungsbegrenzten Pufferraum (9) begrenzt ist.

8. Kassettendichtung nach Anspruch 6 bis 7, gekennzeichnet dadurch, daß das Verhältnis aus dem Gesamtvolumen des verfügbaren Pufferraumes (9) und dem Volumen des Zwischenraumes (8) zumindest 1:50 beträgt.
